Europäisches Patentamt

European Patent Office

Office européen des brevets

(11) Publication number: **0 459 080 A2**

# EUROPEAN PATENT APPLICATION

(21) Application number: 91101356.3

(51) Int. Cl.5: **G11B 7/08**

(22) Date of filing: **01.02.91**

(30) Priority: **26.05.90 JP 135726/90**

(43) Date of publication of application:
**04.12.91 Bulletin 91/49**

(84) Designated Contracting States:
**DE FR GB**

(71) Applicant: **PIONEER ELECTRONIC
CORPORATION
No. 4-1, Meguro 1-chome
Meguro-ku Tokyo 153(JP)**

(72) Inventor: **Akiba, Taichi, c/o Tokorozawa
Koujou
Pioneer Electronic Corp., 2610 Hanazono
4-chome
Tokorozawa-shi, Saitama-ken(JP)**

Inventor: **Araki, Yoshitsugu, c/o Tokorozawa
Koujou
Pioneer Electronic Corp., 2610 Hanazono
4-chome
Tokorozawa-shi, Saitama-ken(JP)**
Inventor: **Kurihara, Toshihiko, c/o Tokorozawa
Koujou
Pioneer Electronic Corp., 2610 Hanazono
4-chome
Tokorozawa-shi, Saitama-ken(JP)**

(74) Representative: **Bohnenberger, Johannes, Dr.
et al
Meissner, Bolte & Partner
Widenmayerstrasse 48 Postfach 86 06 24
W-8000 München 86(DE)**

(54) **Optical pickup for reproducing data on a disk.**

(57) A yoke base (10) having a pair of yokes (11)
mounted thereon is secured to a suspension base
(13) made of plastic. Terminals (13e) are embedded
in the suspension base (13). A holder (16) having an
optical system (16) and a pair of coil substrates
(15a, 15b) for focusing and tracking the optical sys-
tem (16a) is suspended from the suspension base
(13) by conductive wires (14). A circuit substrate (18)
is secured to the yoke base (10). The terminals (13e)
are soldered to wires (18e) on the circuit substrate
(18).

FIG. 2

The present invention relates to an optical pickup for reproducing data on a disk such as a compact disk (CD) and a laser disk (LD).

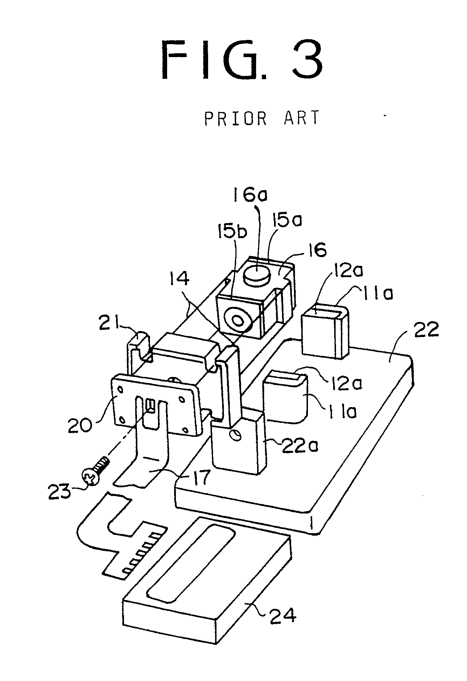

Fig. 3 shows a conventional optical pickup. The optical pickup comprises a holder 16 having a coil substrate 15a for focusing and a coil substrate 15b for tracking, a print circuit board 20, and a base plate 22. The holder has an optical system 16a. The holder 16 is suspended from the print circuit board 20 by four conductive wires 14 in the form of a cantilever. The circuit board 20 is secured to a supporting member 22a on the base plate 22 by a screw 23 through a connecting member 21 of plastic. A pair of yokes 11a each having a magnet 12a are mounted on the base plate 22. The holder 16 is disposed between the yokes 11a so as to oppose the coil substrates 15a and 15b to the yokes, respectively. The print circuit board 20 is connected to a head substrate 24 through a flexible wiring plate 17a with solder. An exciting current is supplied to the coil substrates 15a and 15b through the conductive wires 14 for moving the holder 16 in the focusing direction and the tracking direction.

In such a pickup, the number of parts of the pickup is large and assembling of the pickup is complicated. Hence, it is difficult to lower the cost of the pickup and to reduce the size thereof.

The object of the present invention is to provide an optical pickup which may be reduced in size and can be easily assembled at low cost.

According to the present invention, there is provided an optical pickup comprising, a yoke base, a pair of yokes mounted on the yoke base, each of the yokes having a magnet, a suspension base made of plastic having terminals embedded therein and secured to the yoke base, a holder having an optical system and a pair of coil substrates for focusing and tracking the optical system and suspended from the suspension base by conductive wires, the coil substrates being disposed between the magnets, and a circuit substrate secured to the yoke base, each of the terminals being soldered to an end of a corresponding wire on the circuit substrate.

In an aspect of the invention, the conductive wires are four in number, and exciting current is supplied to the coil substrates through the conductive wires.

The other objects and features of this invention will become understood from the following description with reference to the accompanying drawings.

Fig. 1 is a perspective view of an optical pickup according to the present invention;
Fig. 2 is an exploded perspective view of the optical pickup; and
Fig. 3 is a conventional optical pickup.

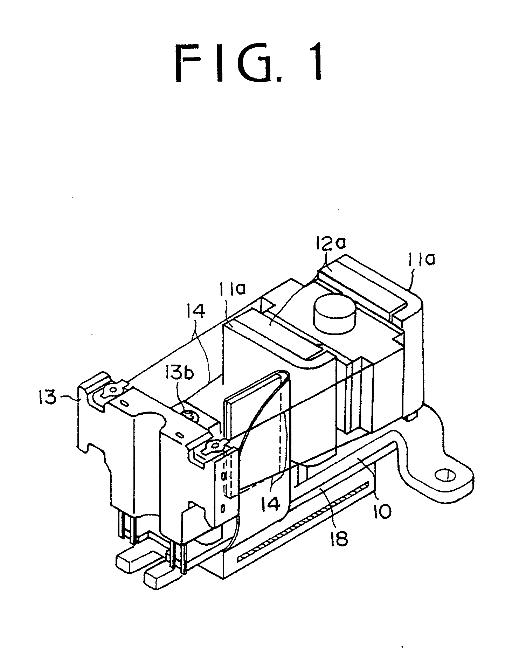

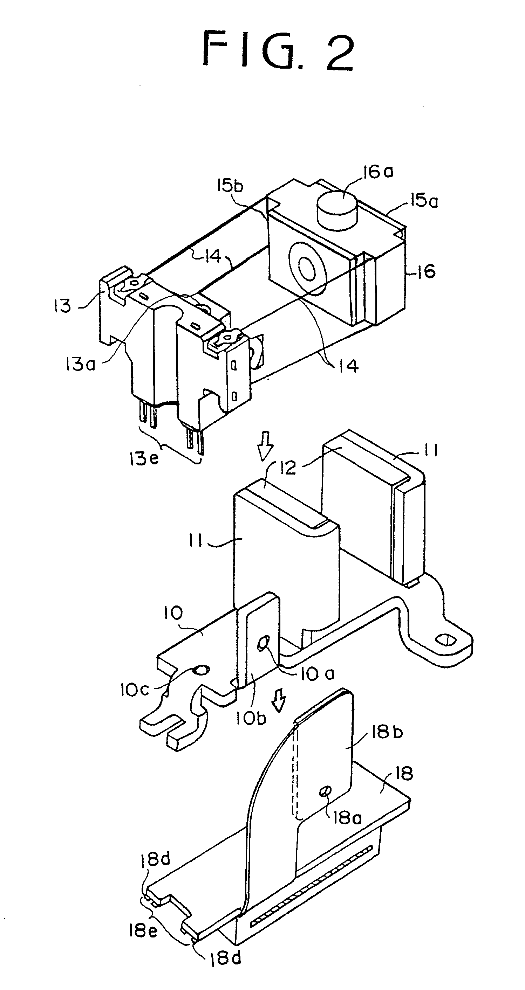

Referring to Figs. 1 and 2, the optical pickup according to the present invention comprises the holder 16, a suspension base 13, a yoke base 10, and a circuit substrate 18. The holder 16 has an optical system 16a and a pair of coil substrates 15a and 15b. On each coil substrate, an exciting coil (not shown) is mounted. The holder 16 is suspended from the suspension base 13 made of plastic by four conductive spring wires 14 in the form of a cantilever. Four terminals 13e each connected to the conductive wire 14 are embedded in the suspension base 13 by insert molding. The yoke base 10 has a pair of yokes 11, each having a magnet 12. The yoke base 10 is secured to the underside of the suspension base 13 by a screw 13b engaged with a hole 13a of the base 13 and a hole 10c formed in the yoke base 10. Both the magnets 12 are positioned adjacent the coil substrates 15a and 15b, respectively.

The circuit substrate 18 has an attaching plate 18b having a hole 18a and a pair of terminal portions 18e. The circuit substrate 18 is secured to the yoke base 10 by a screw (not shown) engaged with a hole 10a formed in an attaching plate 10b of the yoke base 10 and in the hole 18a.

Assembling of the optical pickup is performed as follows.

The holder 16, suspension base 13, yoke base 10 and circuit substrate 18 are separately assembled. The circuit substrate 18 is secured to the yoke base 10 by engaging a screw with the hole 10a and the hole 18a. The suspension base 13 is secured to the yoke base 10 by engaging the screw 13b with the hole 13a of the suspension base 13 and the hole 10c of the yoke base 10. Finally, each of the terminals 13e is soldered to an end of a corresponding wire 18d.

In accordance with the present invention, the suspension base 13 is made of plastic and the terminals 13e are embedded by insert molding. Consequently, the number of parts is reduced and soldering operation is simplified. Accordingly, the optical pickup can be easily manufactured at a low cost.

While the presently preferred embodiment of the present invention has been shown and described, it is to be understood that this disclosure is for the purpose of illustration and that various changes and modifications may be made without departing from the scope of the invention as set forth in the appended claims.

## Claims

1. An optical pickup comprising:
   a yoke base (10);
   a pair of yokes (11) mounted on the yoke base (10),
   each of the yokes (11) having a magnet (12);
   a suspension base (13) made of plastic having terminals (13e) embedded therein and secured to the yoke base (10);

a holder (16) having an optical system (16a) and a pair of coil substrates (15a, 15b) for focusing and tracking the optical system (16a) and suspended from the suspension base (13) by conductive wires (14);

the coil substrates (15a, 15b) being disposed between the magnets (12);

a circuit substrate (18) secured to the yoke base (10);

and each of the terminals (13e) being soldered to an end of a corresponding wire (18e) on the circuit substrate (18).

2. The optical pickup according to claim 1 wherein the conductive wires (14) are four in number, and exiting current is supplied to the coil substrates (15a, 15b) through the conductive wires (14).

# FIG. 1

# FIG. 2

# FIG. 3

PRIOR ART